# EUROPEAN PATENT SPECIFICATION

(11) **EP 1 601 700 B1**
(45) Date of publication and mention of the grant of the patent: **12.09.2007**
(21) Application number: 04707703.7
(22) Date of filing: 03.02.2004
(51) Int. Cl.: C08F 2/44, C08F 210/02, C08F 218/02, C08L 23/04

(54) **PRESSURE POLYMERISATION PROCESS**
DRUCKPOLYMERISATIONSVERFAHREN
PROCEDE DE POLYMERISATION PAR PRESSION

(30) Priority: 12.02.2003 SE 0300373
(43) Date of publication of application: 07.12.2005
(73) Proprietor: Celanese Emulsions Norden AB, 284 21 Perstorp (SE)
(72) Inventor: KARLSSON, Ola, J., S-222 41 Lund (SE); JÖNSSON, Jan-Erik, S-226 53 Lund (SE)
(74) Representative: Stenbäck, Maria Elisabeth
(86) International application number: PCT/SE2004/000142
(87) International publication number: WO 2004/072125

(56) References cited:
- EP-A2- 0 850 956
- EP-A2- 1 095 953
- WO-A1-01/96411
- US-A1- 2002 111 438

## Description

The present invention refers to a pressure polymerisation process yielding a copolymer comprising monomer units derived from ethylene and at least one vinyl ester. The polymerisation process is performed at elevated pressure in the presence of at least one dendritic polymer. The dendritic polymer is preferably at least one dendritic polyester, polyether, polyesteramide and/or polyetheramide.

Ethylene-vinyl ester copolymers are typically prepared in the same manner as polyethylene and other polyolefines. Ethylene-vinyl ester copolymers can be made in for instance solution, suspension or emulsion processes. Said copolymers are predominantly made by emulsion techniques. Ethylene-vinyl ester copolymer processes must of necessity be operated under high pressure, since ethylene is a gas as well as a sluggish monomer.

A process for emulsion polymerisation of ethylene and at least one vinyl ester typically contains monomers, water, protective colloids and/or surfactants, initiators, buffers and maybe molecular weight regulators. Typically, only a portion of the monomers and catalysts are initially charged and the remainder is added during the course of the reaction.

Many different combinations of surfactants and/or protective colloids are used in said emulsion polymerisation. Ethylene-vinyl ester copolymer emulsions can be made with a surfactant alone or with a protective colloid alone, but the usual practice is to use a combination of the two.

The initiators used in ethylene-vinyl ester polymerisations are the familiar free-radical types, such as hydrogen peroxide, peroxysulfates, benzoyl peroxide, *t*-butyl hydroperoxide, lauryl peroxide and redox combinations. In redox combinations, reducing agents, such as sodium metabisulfite, sodium formaldehyde sulfoxylate and ascorbic acid, are among those commonly used along with transition metal salts, such as ferrous sulphate. Emulsion polymerisations are usually conducted with water soluble initiators.

Varying the conditions of polymerisation results in either straight chain or crosslinked polymer emulsions. The incorporation of functional monomers such as *n*-methylol acrylamide or acrylic acid into the polymer provides the ability to crosslink the product in the application either through heat, catalysis or by a curing agent.

Copolymerisations usually must be performed with a continuous monomer feed to obtain homogeneous copolymer compositions. A major drawback in such a continuous monomer feed is the ethylene charging time. A possibility to reduce the time to completion (TTC), that is the ethylene charging time, by increasing the charging rate of ethylene, without negatively affecting the properties of obtained final products, would be very welcome by producers of ethylene-vinyl ester copolymers. A reduced TTC implies a shorter production time and thus an increased production rate without investment in new and/or additional equipment. TTC is determined as the reaction time necessary to feed a predetermined amount of ethylene monomer at a constant pressure. A polymerisation with a higher ethylene monomer uptake rate at the same reactor pressure will thus have a lower TTC value and can consequently be completed in a shorter time.

Ethylene-vinyl ester copolymers, such as ethylene-vinyl acetate copolymers are used in for instance adhesives, coating, such as exterior and interior protective and decorative paints, and textiles, such as non-woven fabrics, which can be applied by most industrial techniques, such as brushing, knife coating, roller coating, spraying, or dipping. Ethylene-vinyl acetate copolymers containing for instance 21-30% by weight of vinyl acetate are widely used in hot-melt adhesives. The ethylene-vinyl acetate copolymers are then mixed with waxes, rubbers and resins to yield hot-melt adhesives.

Detailed information on copolymerisations of ethylene and vinyl esters are available in the scientific literature, such as Encyclopedia of Polymer Science, Vol. 6, 1967, Copolymerzation of Ethylene with Polar Comonomers, pp. 388-431 and Houben-Weyl Methoden der Organischen Chemie, Band XIV Makromolekulare Stoffe Teil 1, 1961, Polymerisation des Vinylacetates und höherer Vinylester, pp. 905-918.

The present invention provides quite unexpectedly a pressure polymerisation process for obtaining a copolymer comprising ethylene and vinyl ester units, wherein the charging time of ethylene can be substantially reduced, such as halved, compared to known prior art processes. The pressure polymerisation of the present invention is a substantially customary process characterised in that it is significantly improved by being performed in the presence of at least one dendritic polymer, such as a dendritic polyester, polyether, polyesteramide and/or polyetheramide. Said dendritic polymer is during said polymerisation preferably present in an amount of 0.1-20%, such as 0.1-10% or 0.5-5%.

Said dendritic polymer is advantageously and preferably a dendritic polyester, polyether, polyesteramide or polyetheramide built up from alcohols, epoxies, oxetanes, aminoalcohols, hydroxyfunctional carboxylic acids, carboxylic acids or anhydrides, glycidyl esters and/or glycidyl ethers. It is of course understood that alcohols, epoxies, oxetanes, aminoalcohols, hydroxyfunctional carboxylic acids, carboxylic acids or anhydrides, glycidyl esters and/or glycidyl ethers include mono, di, tri and polyfunctional compounds possessing necessary amount of reactive groups, sites and/or functions to yield and/or participate in the formation of dendritic structures, including dendrimers. Said dendritic polymer may furthermore be at least partly further chain extended by addition of for instance at least one linear or branched chain extender and/or chain stopper, such as at least one alkylene oxide, at least one saturated or unsaturated aliphatic or aromatic carboxylic acid or at least one corresponding anhydride or halide, and/or at least one carboxyfunctional ester, polyester, ether and/or polyether. Said preferred dendritic polymers are substantially of the type disclosed in the published International Patent Applications WO 93/17060, WO 93/18075, WO 96/07688, WO 96/12754, WO 00/56802 and WO 01/16213 and WO 02/040572, Preferred embodiments of said dendritic polymer include dendritic polyesters and polyethers having a hydroxyfunctionality, such as having six or more hydroxyl groups. The hydroxyfunctionality such a dendritic polymer may be derived from one or more hydroxyl, hydroxyalkyl, hydroxyalkoxy, hydroxyalkoxyalkyl and/or hydroxyalkylamide groups.

Said at least one vinyl ester is in preferred embodiments of the present invention a vinyl ester of at least one linear or branched carboxylic acid having for instance 1-12 carbon atoms. Especially preferred embodiments include vinyl esters such as vinyl acetate, vinyl propionate, vinyl isobutyrate, vinyl 2-ethylhexanoate, vinyl versatate and vinyl laurate. The most preferred vinyl esters are vinyl acetate and vinyl versatate.

Said yielded copolymer may optionally in various embodiments additionally comprise monomer units derived from at least one crosslinking functional monomer, such as at least one bi-functional monomer having at least one polymerisable vinyl group and at least one hydroxyalkyl group or a monomer being an ether of such a compound. Said at least one crosslinking monomer can suitably be for instance an unsaturated organic acid amide, such as acryl amide, a N-methylol derivative of an unsaturated organic acid amide, such as N-methylolacrylamide and/or N-methylolmethacrylamide, or an ether of a N-methylol derivative, such as N-(*iso*-butoxymethyl)acrylamide and/or N-(*n*-butoxymethyl)acrylamide. Further suitable crosslinking monomers include glycidyl acrylates, glycidyl methacrylates, multifunctional acrylates and multifunctional methacrylates, allylmethacrylate, alkoxyvinylsilanes, alkoxyacrylsilanes and/or allcoxymethacrylsilanes. Said at least one crosslinking monomer is typically present in an amount of for instance 0-10%, such as 0.1-10%, 0.3-8%, 0.3-6%, 0.4-2%, 0.5-2% or 1-6%, depending on for instance desired properties, crosslinking density and selected crosslinking monomer.

Multifunctional acrylates and methacrylates are to be understood as di, tri and polyesters of di, tri or polyhydric alcohols and acrylic and/or methacrylic acid and can suitably be exemplified by diacrylates and dimethacrylates, such as butanediol diacrylate, dipropylene glycol diacrylate, hexandiol diacrylate, tripropylene glycol diacrylate, butanediol dimethacrylate, ethylene glycol dimethacrylate and diethylene glycol dimethacrylate, and/or exemplified by 2-hydroxyalkyl-2-alkyl-1,3-propanediol acrylates, 2,2-dihydroxyalkyl-1,3-propanediol acrylates, 2-hydroxyalkoxy-2-alkyl-1,3-propanediol acrylates, 2,2-dihydroxyalkoxy--1,3-propanediol acrylates, 2-hydroxyalkoxyakyl-2-akyl-1,3-propanediol acrylates and/or 2,2-dihydroxyalkoxyalkyl-1,3-propanediol acrylates, such as trimethylolpropane triacrylate, ethoxylated trimethylolpropane triacrylate and ethoxylated pentaerythritol diacrylate.

Said silanes include compounds such as trialkoxyvinylsilanes, alkyldialkoxyvinylsilanes, acryloxyalkoxysilanes, acryloxyalkylalkoxysilanes, alkoxyacrylsilanes, methacryloxy-alkoxysilanes, methacryloxyalkylalkoxysilane and/or alkoxymethacrylsilanes, wherein said alkyl and/or alkoxy is for instance linear or branched having for instance 1-4 carbon atoms. Said silanes can suitably be exemplified by trimethoxyvinylsilane, triethoxyvinylsilane, triisopropoxyvinylsilane, propyldiisopropoxyvinylsilane, methoxymethacrylsilane and/or 3-methacryloxypropyltriisopropoxysilane.

Said yielded copolymer may, furthermore, optionally in said embodiments additionally comprise monomer units derived from at least one stabilising functional monomer having at least one radically polymerisable group, such as a charged group selected from sulphate, sulphonate, phosphate and/or carboxylic acid, and/or at least one colloidally and/or sterically stabilising group, such as alkoxy having a chain length of 4-60 alkoxy units derived from for instance ethylene oxide. Said stabilising monomer is preferably acrylic acid, methacrylic acid and/or vinylsulphonates, such as sodium vinylsulphonate. Said stabilising monomer is suitably and preferably present in an amount of 0-5%, such as 0.01-5%, 0.05-2% or 0.5-1.5%.

Said yielded copolymer may, yet furthermore, optionally comprise additional monomer units derived from at least one monoester of acrylic, methacrylic, crotonic acid and/or isocrotonic acid. Preferred monoesters include C₁-C₁₀ alkyl acrylates and methacrylates, such as methyl acrylate, ethyl acrylate, butyl acrylate, 2-ethylhexyl acrylate, methyl methacrylate, ethyl methacrylate and/or butyl methacrylate. Said ester is suitably and preferably present in an amount in of 0-50%, such as 0.01-50%, 1-40% or 5-30%.

The pressure polymerisation process of the present invention is preferably performed at a weight ratio charged ethylene to charged vinyl ester of 1-60% ethylene and 99-40% vinyl ester, such as at a weight ratio ethylene to vinyl ester of 1:99%, 10:90%, 15:85%, 40:60%, 50:50% or 60:40%.

The pressure polymerisation process of the present invention is suitably an emulsion, a solution or a suspension polymerisation. Said polymerisation is most preferably an emulsion polymerisation performed at a pressure of 1-200 bar, such as 3-150 or 5-100 bar, and at a temperature of 0-100°C, such as 9-90°C or 20-85°C.

A polymerisation process, wherein the polymerisation is performed in the presence of dendritic polymer can, furthermore, advantageously be used in the manufacture of for instance ethylene homopolymers and copolymers comprising monomer units derived from styrene and butadiene instead of disclosed ethylene and at least one vinyl ester. The suitable amount of dendritic polymer in an ethylene homopolymerisation and/or in a styrene-butadiene copolymersation is to be found within a range similar to above disclosed, but is preferably empirically determined.

Without further elaboration, it is believed that one skilled in the art can, using the preceding description, utilise the present invention to its fullest extent. While particular embodiments of the invention will be shown in below Examples. Copolymers comprising monomer units derived from ethylene and vinyl acetate will hereinafter be used as model compounds. In the following Examples 1-6 show:
- Example 1:: Manufacture, without the presence of a dendritic polymer, of a copolymer comprising ethylene and vinyl acetate units. The copolymer furthermore comprises 1.5 parts per hundred of a cross linking functional monomer and 0.1 parts per hundred of a stabilising functional monomer. Reference to the embodiment polymerisation presented in Example 2.
- Example 2:: Manufacture, in the presence of 0.5 parts per hundred of a dendritic polymer according to an embodiment of the present invention, of a copolymer comprising ethylene and vinyl acetate units. The copolymer furthermore comprises 1.5 parts per hundred of a cross linking functional monomer and 0.1 parts per hundred of a stabilising functional monomer.
- Example 3:: Manufacture, without the presence of a dendritic polymer, of a copolymer comprising ethylene and vinyl acetate units. The copolymer furthermore comprises 0.5 parts per hundred of a cross linking functional monomer and 0.1 parts per hundred of a stabilising functional monomer. Reference to the embodiment polymerisation presented in Example 4.
- Example 4:: Manufacture, in the presence of 0.5 parts per hundred of a dendritic polymer according to an embodiment of the present invention, of a copolymer comprising ethylene and vinyl acetate units. The copolymer furthermore comprises 0.5 parts per hundred of a cross linking functional monomer and 0.1 parts per hundred of a stabilising functional monomer.
- Example 5:: Manufacture, without the presence of a dendritic polymer, of a copolymer comprising ethylene and vinyl acetate units. The copolymer furthermore comprises 1.5 parts per hundred of a cross linking functional monomer. Reference to the polymerisation presented in Example 6.
- Example 6:: Manufacture, in the presence of 1.0 parts per hundred of a dendritic polymer according to an embodiment of the present invention, of a copolymer comprising ethylene and vinyl acetate units. The copolymer furthermore comprises 1.5 parts per hundred of a cross linking functional monomer.

The amount of dendritic polymer, crosslinking functional monomer (CMF) and stabilising functional monomer (SFM) used in Examples 1-6 as given in the text are summarised in Table 1. The time to completion (TTC) and the properties of obtained final dispersions are given in Table 2. The ethylene monomer uptake is presented as a function of reaction time in Graphs 1 and 2.

### Example 1

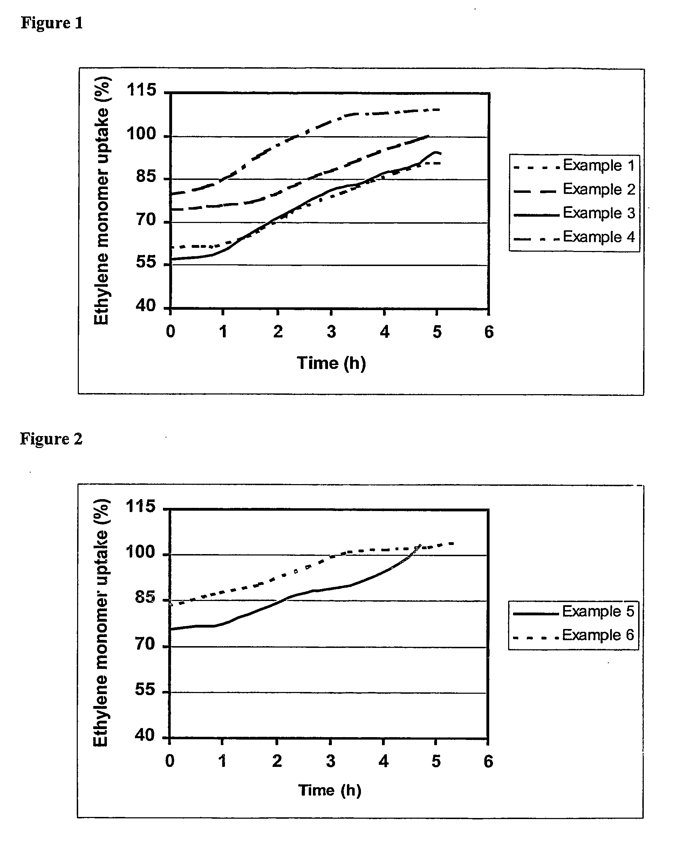

2.4 parts per hundred (pph) of a colloidal stabiliser (polyvinyl alcohol), 0.1 pph of sodium metabisulphite, 0.1 pph of sodium acetate, 0.4 pph of a nonionic surfactant (Emulsogen® EPN 287, Clariant GmbH, Functional Chemicals, Germany), 4.4E-3 pph of a defoamer (Agitan® 305, Müntzing Chemie GmbH, Germany) and 33.3 pph of water were charged to a pressure reactor and the reactor was heated to a polymerisation temperature of 62°C. 3.4 pph of vinyl acetate and 0.6 pph of ethylene were now charged together with 0.02 pph of ammonium persulphate dissolved in 0.3 pph of water. Subsequent the so called pre-reaction, 35.6 pph of vinyl acetate was continuously fed during 5 hours together with a solution of 0.17 pph of ammonium persulphate dissolved in 2.8 pph of water. A reactor pressure of 55 bar was, when charging of vinyl acetate commenced, applied by charging the ethylene monomer to the reactor. Said pressure was maintained until 7.8 pph of ethylene was charged and the ethylene charging was then stopped. A solution of 1.5 pph of a crosslinking functional monomer (N-methylolacrylamide) and 0.1 pph of a stabilising functional monomer (sodium vinylsulphonate) dissolved in 11.4 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 1. The time to completion (TTC) and the properties of the final dispersion are given in Table 2.

### Example 2

2.3 pph of a colloidal stabiliser (polyvinyl alcohol), 0.1 pph of sodium metabisulphite, 0.1 pph of sodium acetate, 0.4 pph of a nonionic surfactant (Emulsogen^{®} EPN 287, Clariant GmbH, Functional Chemicals, Germany), 4.4E-3 pph of a defoamer (Agitan^{®} 305, Müntzing Chemie GmbH, Germany), 0.5 pph of a dendritic polyester (Boltorn^{®} H20, Perstorp Specialty Chemicals AB, Sweden) and 33.1 pph of water were charged to a pressure reactor and the reactor was heated to a polymerisation temperature of 62°C. 3.4 pph of vinyl acetate and 0.6 pph of ethylene were now charged together with 0.02 pph of ammonium persulphate dissolved in 0.3 pph of water. Subsequent the so called pre-reaction, 35.4 pph of vinyl acetate was continuously fed during 5 hours together with a solution of 0.17 pph of ammonium persulphate dissolved in 2.8 pph of water. A reactor pressure of 55 bar was, when charging of vinyl acetate commenced, applied by charging the ethylene monomer to the reactor. Said pressure was maintained until 7.7 pph of ethylene was charged and the ethylene charging was then stopped. A solution of 1.5 pph of a crosslinking functional monomer (N-methylolacrylamide) and 0.1 pph of a stabilising functional monomer (sodium vinylsulphonate) dissolved in 11.4 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 1. The TTC and the properties of the final dispersion are given in Table 2.

### Example 3

2.4 pph of a colloidal stabiliser (polyvinyl alcohol), 0.1 pph of sodium metabisulphite, 0.1 pph of sodium acetate, 0.4 pph of a nonionic surfactant (Emulsogen^{®} EPN 287, Clariant GmbH, Functional Chemicals, Germany), 4.5E-3 pph of a defoamer (Agitan^{®} 305, Müntzing Chemie GmbH, Germany) and 34 pph of water were charged to a pressure reactor and the reactor was heated to a polymerisation temperature of 62°C. 3.5 pph of vinyl acetate and 0.6 pph of ethylene were now charged together with 0.02 pph of ammonium persulphate dissolved in 0.3 pph of water. Subsequent the so called pre-reaction, 36.4 pph of vinyl acetate was continuously fed during 5 hours together with a solution of 0.18 pph of ammonium persulphate dissolved in 2.8 pph of water. A reactor pressure of 55 bar was, when charging of vinyl acetate commenced, applied by charging the ethylene monomer to the reactor. Said pressure was maintained until 7.9 pph of ethylene was charged and the ethylene charging was then stopped. A solution of 0.5 pph of a crosslinking functional monomer (N-(*iso*-butoxymethyl)acrylamide) and 0.1 pph of a stabilising functional monomer (sodium vinylsulphonate) dissolved in 10.6 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 1. The TTC and the properties of the final dispersion are given in Table 2.

### Example 4

2.4 pph of a colloidal stabiliser (polyvinyl alcohol), 0.1 pph of sodium metabisulphite, 0.1 pph of sodium acetate, 0.4 pph of a nonionic surfactant (Emulsogen^{®} EPN 287, Clariant GmbH, Functional Chemicals, Germany), 4.5E-3 pph of a defoamer (Agitan^{®} 305, Müntzing Chemie GmbH, Germany), 0.5 pph of a dendritic polyester (Boltorn^{®} H20, Perstorp Specialty Chemicals AB, Sweden) and 33.8 pph of water were charged to a pressure reactor and the reactor was heated to a polymerisation temperature of 62°C. 3.5 pph of vinyl acetate and 0.6 pph of ethylene were now charged together with 0.02 pph of ammonium persulphate dissolved in 0.3 pph of water. Subsequent the so called pre-reaction, 36.2 pph of vinyl acetate was continuously fed during 5 hours together with a solution of 0.18 pph of ammonium persulphate dissolved in 2.8 pph of water. A reactor pressure of 55 bar was, when charging of vinyl acetate commenced, applied by charging the ethylene monomer to the reactor. Said pressure was maintained until 7.9 pph of ethylene was charged and the ethylene charging was then stopped. A solution of 0.5 pph of a crosslinking functional monomer (N-(*iso*-butoxymethyl)acrylamide) and 0.1 pph of a stabilising functional monomer (sodium vinyl sulphonate) dissolved in 10.5 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 1. The TTC and the properties of the final dispersion are given in Table 2.

### Example 5

2.4 pph of a colloidal stabiliser (polyvinyl alcohol), 0.1 pph of sodium metabisulphite, 0.1 pph of sodium acetate, 0.4 pph of a nonionic surfactant (Emulsogen^{®} EPN 287, Clariant GmbH, Functional Chemicals, Germany) and 33.5 pph of water were charged to a pressure reactor and the reactor was heated to a polymerisation temperature of 62°C. 3.5 pph of vinyl acetate and 0.6 pph of ethylene were now charged together with 0.02 pph of ammonium persulphate dissolved in 0.3 pph of water. Subsequent the so called pre-reaction, 35.8 pph of vinyl acetate was continuously fed during 5 hours together with a solution of 0.18 pph of ammonium persulphate dissolved in 2.8 pph of water. A reactor pressure of 55 bar was, when charging of vinyl acetate commenced, applied by charging the ethylene monomer to the reactor. Said pressure was maintained until 7.8 pph of ethylene was charged and the ethylene charging was then stopped. A solution of 1.5 pph of a crosslinking functional monomer (N-methylolacrylamide) dissolved in 11.1 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 2. The TTC and the properties of the final dispersion are given in Table 2.

### Example 6

2.4 pph of a colloidal stabiliser (polyvinyl alcohol), 0.1 pph of sodium metabisulphite, 0.1 pph of sodium acetate, 0.4 pph of a nonionic surfactant (Emulsogen^{®} EPN 287, Clariant GmbH, Functional Chemicals, Germany), 1.0 pph of a dendritic polyester (Boltorn^{®} H20, Perstorp Specialty Chemicals AB, Sweden) and 33.2 pph of water were charged to a pressure reactor and the reactor was heated to a polymerisation temperature of 62°C. 3.4 pph of vinyl acetate and 0.6 pph of ethylene were now charged together with 0.02 pph of ammonium persulphate dissolved in 0.3 pph of water. Subsequent the so called pre-reaction, 35.5 pph of vinyl acetate was continuously fed during 5 hours together with a solution of 0.17 pph of ammonium persulphate dissolved in 2.8 pph of water. A reactor pressure of 55 bar was, when charging of vinyl acetate commenced, applied by charging the ethylene monomer to the reactor. Said pressure was maintained until 7.7 pph of ethylene was charged and the ethylene charging was then stopped. A solution of 1.5 pph of a crosslinking functional monomer (N-methylolacrylamide) dissolved in 11.0 pph of water were separately and continuously charged to the reactor during 4 hours, parallel to the other monomer feed. The reactor was, following the continuous charging of the monomer mixtures and the ammonium persulphate solution, kept at 62°C for a further hour. The prepared dispersion was now allowed to cool to room temperature. The ethylene monomer uptake is presented as a function of reaction time in Figure 2. The TTC and the properties of the final dispersion are given in Table 2.

**Table 1**

| Summary of recipes of Examples 1-6. | | | |
|---|---|---|---|
| **Example no.** | **Dendritic polymer pph** | **CFM pph** | **SFM pph** |
| 1 | 0 | 1.5 | 0.1 |
| 2 | 0.5 | 1.5 | 0.1 |
| 3 | 0 | 0.5 | 0.1 |
| 4 | 0.5 | 0.5 | 0.1 |
| 5 | 0 | 1.5 | 0 |
| 6 | 1.0 | 1.5 | 0 |

| | | | |
|---|---|---|---|
| CFM = Crosslinking functional monomer. SFM = Stabilising functional monomer. | | | |

**Table 2**

| Properties of dispersions obtained in Examples 1-6 and TTC for polymerisations in said Examples. | | | | | | |
|---|---|---|---|---|---|---|
| **Example no.** | **Solids content %** | **Tg °C** | **pH** | **Viscosity Pas** | **Grit %** | **TTC hrs** |
| 1 | 50 | 4 | 4,0 | 1.0 | 0.05 | 6.2 |
| 2 | 49 | 2 | 3,8 | 0.8 | 0.25 | 4.7 |
| 3 | 49 | 1 | 4,0 | 1.7 | 0.09 | 5.3 |
| 4 | 49 | 4 | 4,0 | 2.7 | 0.05 | 2.3 |
| 5 | 49 | 3 | 3,8 | 1.9 | 0.04 | 4.4 |
| 6 | 52 | 4 | 4,3 | 5.8 | 0.36 | 3.1 |

| | | | | | | |
|---|---|---|---|---|---|---|
| Tg = Glass transition temperature. | | | | | | |

Table 2 shows, when Examples 1-6 are compared, that there are not any major differences in obtained properties. Times to completion (TTC) are, however, substantially reduced when a dendritic polymer is present during the polymerisation (Examples 2, 4 and 6). The reduced TTC:s are even more obvious when the ethylene monomer uptake during the polymerisation is plotted as a function of time (see enclosed figures 1 and 2).

## Claims

1. A pressure polymerisation process yielding a copolymer comprising monomer units derived from ethylene and at least one vinyl ester **characterised in, that** said polymerisation is performed in presence of at least one dendritic polymer, such as a dendritic polyester, polyether, polyesteramide and/or polyetheramide.

2. A pressure polymerisation process according to claim 1 **characterised in, that** said dendritic polymer is present in an amount of 0.1-20%, such as 0.1-10% or 0.5-5%.

3. A pressure polymerisation process according to any of the claim 1 or 2 **characterised in, that** said dendritic polymer is at least partly further chain extended by addition of at least one linear or branched chain extender and/or chain stopper.

4. A pressure polymerisation process according to claim 3 **characterised in, that** said at least one linear or branched chain extender and/or chain stopper is at least one alkylene oxide, at least one saturated or unsaturated aliphatic or aromatic carboxylic acid or at least one corresponding anhydride or halide, and/or at least one carboxyfunctional ester, polyester, ether and/or polyether.

5. A pressure polymerisation process according to any of the claims 1-4 **characterised in, that** said dendritic polymer has at least two dendritic generations.

6. A pressure polymerisation process according to any of the claims 1-5 **characterised in, that** said at least one vinyl ester is vinyl acetate, vinyl propionate, vinyl isobutyrate, vinyl 2-ethylhexanoate, vinyl versatate and/or vinyl laurate

7. A pressure polymerisation process according to any of the claims 1-6 **characterised in, that** said at least one vinyl ester is vinyl acetate and/or vinyl versatate.

8. A pressure polymerisation process according to any of the claims 1-7 **characterised in, that** said yielded copolymer additionally comprises monomer units derived from at least one cross linking functional monomer.

9. A pressure polymerisation process according to claim 8 **characterised in, that** said at least one cross linking functional monomer is a monomer having at least one polymerisable vinyl group.

10. A pressure polymerisation process according to claim 8 or 9 **characterised in, that** said at least one cross linking functional monomer is at least one unsaturated organic acid amide, at least one N-methylol derivative of at least one unsaturated organic acid amide and/or at least one ether of at least one N-methylol derivative of at least one unsaturated organic acid amide.

11. A pressure polymerisation process according to any of the claims 8-10 **characterised in, that** said at least one cross linking functional monomer is acryl amide, N-methylolacrylamide, N-methylolmethacrylamide, N-(iso-butoxymethyl)acrylamide and/or N-(n-butoxymethyl)acrylamide.

12. A pressure polymerisation process according to any of the claims 8-10 **characterised in, that** said at least one cross linking functional monomer is a glycidyl acrylate, a glycidyl methacrylate and/or allyl methacrylate.

13. A pressure polymerisation process according to any of the claims 8-10 **characterised in, that** said at least one cross linking functional monomer is at least one di, tri and multifunctional ester of a di, tri or polyhydric alcohol and acrylic and/or methacrylic acid.

14. A pressure polymerisation process according to claim 13 **characterised in, that** said at least one cross linking functional monomer is butanediol diacrylate, dipropylene glycol diacrylate, hexandiol diacrylate, tripropylene glycol diacrylate, butanediol dimethacrylate, ethylene glycol dimethacrylate, diethylene glycol dimethacrylate, trimethylolpropane triacrylate, trimethylolpropane triacrylate, ethoxylated trimethylolpropane triacrylate and/or ethoxylated pentaerythritol diacrylate.

15. A pressure polymerisation process according to any of the claims 8-10 **characterised in, that** said at least one cross linking functional monomer is at least one trialkoxyvinylsilane, alkyldialkoxyvinylsilane, acryloxyalkoxysilane, acryloxyalkylalkoxysilane, alkoxyacrylsilane, methacryloxyalkoxysilane, methacryloxyalkylalkoxysilane and/or alkoxymethacrylsilane.

16. A pressure polymerisation process according to claim 15 **characterised in, that** said alkyl and/or said alkoxy is linear or branched having 1-4 carbon atoms.

17. A pressure polymerisation process according to claim 15 or 16 **characterised in, that** said at least one crosslinking monomer is trimethoxyvinylsilane, triethoxyvinylsilane, triisopropoxyvinylsilane, methoxymethacrylsilane and/or 3-methacryloxypropyltriisopropoxysilane.

18. A pressure polymerisation process according to any of the claims 8-17 **characterised in, that** said at least one cross linking functional monomer is present in an amount of 0.1-10%, such as 0.3-8%, 0.3-6%, 0.4-2%, 0.5-2% or 1-6%.

19. A pressure polymerisation process according to any of the claims 1-18 **characterised in, that** said yielded copolymer additionally comprises monomer units derived from at least one stabilising functional monomer having at least one radically polymerisable group and/or at least one colloidally and/or sterically stabilising group.

20. A pressure polymerisation process according to claim 19 **characterised in, that** said at least one stabilising functional monomer is vinylsulphonate and/or sodium vinylsulphonate.

21. A pressure polymerisation process according to claim 19 **characterised in, that** said at least one stabilising functional monomer is acrylic and/or methacrylic acid.

22. A pressure polymerisation process according to any of the claims 19-21 **characterised in, that** said at least one stabilising functional monomer is present in im amount of 0.01-5%, such as 0.3-2% or 0.05-0.2%.

23. A pressure polymerisation process according to claims 1-22 **characterised in, that** yielded copolymer additionally comprises monomer units derived from at least one monoester of acrylic, methacrylic, crotonic acid and/or isocrotonic acid.

24. A pressure polymerisation process according to claim 23 **characterised in, that** said at least one monoester is a C₁-C₁₀ alkyl acrylate or methacrylate, such as methyl acrylate, ethyl acrylate, butyl acrylate, 2-ethylhexyl acrylate, methyl methacrylate, ethyl methacrylate and/or butyl methacrylate.

25. A pressure polymerisation process according to claim 23 or 24 **characterised in, that** said at least one monoester is present in an amount of 0.1-50%, such as 1-40% or 5-30%.

26. A pressure polymerisation process according to any of the claims 1-25 **characterised in**, a weight ratio charged ethylene to charged vinyl ester of 1-60% ethylene and 99-40% vinyl ester, such as at a weight ratio ethylene to vinyl ester of 1:99%, 10:90%, 15:85%, 40:60%, 50:50% or 60:40%.

27. A pressure polymerisation process according to any of the claims 1-26 **characterised in, that** said polymerisation is performed at a pressure of 1-200 bar, such as 3-150 bar or 5-100 bar.

28. A pressure polymerisation process according to any of the claims 1-27 **characterised in, that** said polymerisation is performed at a temperature of 0-100°C, such as 5-90°C or 20-85°C.

29. A pressure polymerisation process according to any of the claims 1-28 **characterised in, that** said polymerisation is an emulsion, a solution or a suspension polymerisation.

30. A pressure polymerisation process according to any of the claims 1-29 **characterised in, that** said yielded copolymer comprises monomer units derived from ethylene and vinyl acetate and that said copolymer is obtained by emulsion polymerisation.

## Patentansprüche

1. Druckpolymerisationsverfahren, das ein Copolymer ergibt, das Monomereinheiten umfasst, die von Ethylen und wenigstens einem Vinylester abgeleitet sind, **dadurch gekennzeichnet, dass** die Polymerisation in Gegenwart von wenigstens einem dendritischen Polymer wie einem dendritischen Polyester, Polyether, Polyesteramid und/oder Polyetheramid durchgeführt wird.

2. Druckpolymerisationsverfanren nach Anspruch 1, **dadurch gekennzeichnet, dass** das dendritische Polymer in einer Menge von 0,1-20 %, wie 0,1-10 % oder 0,5-5 % vorhanden ist.

3. Druckpolymerisationsverfahren nach einem der Ansprüche 1 oder 2, **dadurch gekennzeichnet, dass** das dendritische Polymer wenigstens zum Teil durch die Addition von wenigstens einem linearen oder verzweigten Kettenverlängerer und/oder Kettenabbrecher weiter kettenverlängert ist.

4. Druckpolymerisationsverfahren nach Anspruch 3, **dadurch gekennzeichnet, dass** der wenigstens eine lineare oder verzweigte Kettenverlängerer und/oder Kettenabbrecher wenigstens ein Alkylenoxid, wenigstens eine gesättigte oder ungesättigte aliphatische oder aromatische Carbonsäure oder wenigstens ein entsprechendes Anhydrid oder Halogenid und/oder wenigstens ein carboxyfunktioneller Ester, Polyester, Ether und/oder Polyether ist.

5. Druckpolymerisationsverfahren nach einem der Ansprüche 1-4, **dadurch gekennzeichnet, dass** das dendritische Polymer wenigstens zwei dendritische Generationen aufweist.

6. Druckpolymerisationsverfahren nach einem der Ansprüche 1-5, **dadurch gekennzeichnet, dass** der wenigstens eine Vinylester Vinylacetat, Vinylpropionat, Vinylisobutyrat, Vinyl-2-ethyl-hexanoat, Vinylversatat und/oder Vinyllaurat ist.

7. Druckpolymerisationsverfahren nach einem der Ansprüche 1-6, **dadurch gekennzeichnet, dass** der wenigstens eine Vinylester Vinylacetat und/oder Vinylversatat ist.

8. Druckpolymerisationsverfahren nach einem der Ansprüche 1-7, **dadurch gekennzeichnet, dass** das erhaltene Copolymer außerdem Monomereinheiten umfasst, die von wenigstens einem vernetzenden funktionellen Monomer abgeleitet sind.

9. Druckpolymerisationsverfahren nach Anspruch 8, **dadurch gekennzeichnet, dass** das wenigstens eine vernetzende funktionelle Monomer ein Monomer mit wenigstens einer polymerisierbaren Vinylgruppe ist.

10. Druckpolymerisationsverfahren nach Anspruch 8 oder 9, **dadurch gekennzeichnet, dass** das wenigstens eine vernetzende funktionelle Monomer wenigstens ein ungesättigtes organisches Säureamid, wenigstens ein N-Methylolderivat von wenigstens einem ungesättigten organischen Säureamid und/oder wenigstens ein Ether von wenigstens einem N-Methylolderivat von wenigstens einem ungesättigten organischen Säureamid ist.

11. Druckpolymerisationsverfahren nach einem der Ansprüche 8-10, **dadurch gekennzeichnet, dass** das wenigstens eine vernetzende funktionelle Monomer Acrylamid, N-Methylolacrylamid, N-Methylolmethacrylamid, N-(iso-butoxymethyl)acrylamid und/oder N-(n-Butoxymethyl)acrylamid ist.

12. Druckpolymerisationsverfahren nach einem der Ansprüche 8-10, **dadurch gekennzeichnet, dass** das wenigstens eine vernetzende funktionelle Monomer ein Glycidylacrylat, ein Glycidylmethacrylat und/oder Allylmethacrylat ist.

13. Druckpolymerisationsverfahren nach einem der Ansprüche 8-10, **dadurch gekennzeichnet, dass** das wenigstens eine vernetzende funktionelle Monomer wenigstens ein di-, tri- und multifunktioneller Ester von einem zwei-, drei- oder mehrwertigen Alkohol und Acryl- und/oder Methacrylsäure ist.

14. Druckpolymerisationsverfahren nach Anspruch 13, **dadurch gekennzeichnet, dass** das wenigstens eine vernetzende funktionelle Monomer Butandioldiacrylat. Dipropylenglycoldiacrylat, Hexandioldiacrylat, Tripropylenglycoldiacrylat, Butandioldimethacrylat, Ethylenglycoldimethacrylat, Diethylenglycoldimethacrylat, Trimethylolpropantriacrylat, Trimethylolpropantriacrylat, ethoxyliertes Trimethylolpropantriacrylat und/oder ethoxyliertes Pentaerythritoldiacrylat ist.

15. Druckpolymerisationsverfahren nach einem der Ansprüche 8-10, **dadurch gekennzeichnet, dass** das wenigstens eine vernetzende funktionelle Monomer wenigstens ein Trialkoxyvinylsilan, Alkyldialkoxyvinylsilan, Acryloxyalkoxysilan, Acryloxyalkylalkoxysilan, Alkoxyacrylsilan, Methacryloxyalkoxysilan, Methacryloxyalkylalkoxysilan und/oder Alkoxymethacrylsilan ist.

16. Druckpolymerisationsverfahren, nach Anspruch 15, **dadurch gekennzeichnet, dass** das Alkyl und/oder das Alkoxy linear oder verzweigt mit 1-4 Kohlenstoffatomen ist.

17. Druckpolymerisationsverfahren nach Anspruch 15 oder 16, **dadurch gekennzeichnet, dass** das wenigstens eine vernetzende Monomer Trimethoxyvinylsilan, Triethoxyvinylsilan, Triisopropoxyvinylsilan, Methoxymethacrylsilan und/oder 3-Methacryloxypropyltriisopropoxysilan ist.

18. Druckpolymerisations verfahren nach einem der Ansprüche 8-17, **dadurch gekennzeichnet, dass** das wenigstens eine vernetzende funktionelle Monomer in einer Menge von 0.1-10%, wie 0,3-8 %, 0,3-6 %, 0,4-2 %, 0,5-2 % oder 1-6 % vorhanden ist.

19. Druckpolymerisations verfahren nach einem der Ansprüche 1-18, **dadurch gekennzeichnet, dass** das erhaltene Copolymer außerdem Monomereinheiten umfasst, die von wenigstens einem stabilisierenden funktionellen Monomer mit wenigstens einer radikalisch polymerisierbaren Gruppe und/oder wenigstens einer kolloidal und/oder sterisch stabilisierenden Gruppe abgeleitet sind.

20. Druckpolymerisationsverfahren nach Anspruch 19, **dadurch gekennzeichnet, dass** das wenigstens eine stabilisierende funktionelle Monomer Vinylsulfonat und/oder Natriumvinylsulfonat ist.

21. Druckpolymerisationsverfahren nach Anspruch 19, **dadurch gekennzeichnet, dass** das wenigstens eine stabilisierende funktionelle Monomer Acryl- und/oder Methacrylsäure ist.

22. Druckpolymerisationsverfahren nach einem der Ansprüche 19-21, **dadurch gekennzeichnet, dass** das wenigstens eine stabilisierende funktionelle Monomer in einer Menge von 0,01-5%, wie 0,3-2 % oder 0,05-0,2 % vorhanden ist.

23. Druckpolymerizationsverfahren nach den Ansprüchen 1-22, **dadurch gekennzeichnet, dass** das erhaltene Copolymer außerdem Monomereinheiten umfasst, die von wenigstens einem Monoester von Acryl-, Methacryl-, Crotonsäure und/oder Isocrotonsäure abgeleitet sind.

24. Druckpolymerisationsverfahren nach Anspruch 23, **dadurch gekennzeichnet, dass** der wenigstens eine Monoester ein C₁-C₁₀-Alkylacrylat oder Methacrylat wie Methylacrylat, Ethylacrylat, Butylacrylat, 2-Ethylhexylacrylat, Methylmethacrylat, Ethylmethacrylat und/oder Butylmethacrylat ist.

25. Druckpolymerisationsverfahren nach Anspruch 23 oder 24, **dadurch gekennzeichnet, dass** der wenigstens eine Monoester in einer Menge von 0,1-50 %, wie 1-40 % oder 5-30 % vorhanden ist.

26. Druckpolymerisationsverfahren nach einem der Ansprüche 1-25, **gekennzeichnet durch** ein Gewichtsverhältnis von eingesetztem Ethylen zu eingesetztem Vinylester von 1-60 % Ethylen und 99-40 % Vinylester, wie ein Gewichtsverhältnis von Ethylen zu Vinylester von 1: 99 %, 10:90 %, 15:85 %, 40:60 %, 50:50 % oder 60:40 %.

27. Druckpolymerisationsverfahren nach einem der Ansprüche 1-26, **dadurch gekennzeichnet, dass** die Polymerisation bei einem Druck von 1-200 bar, wie 3-150 bar oder 5-100 bar durchgeführt wird.

28. Druckpolymerisationsverfahren nach einem der Ansprüche 1-27, **dadurch gekennzeichnet, dass** die Polymerisation bei einer Temperatur von 0-100°C, wie 5-90°C oder 20-85°C durchgeführt wird.

29. Druckpolymerisationsverfahren nach einem der Ansprüche 1-28, **dadurch gekennzeichnet, dass** die Polymerisation eine Emulsions- eine Losungs- oder eine Suspensionspolymerisation ist.

30. Druckpolymerisationsverfahren nach einem der Ansprüche 1-29, **dadurch gekennzeichnet, dass** das erhaltene Copolymer Monomereinheiten umfasst, die von Ethylen und Vinylacetat abgeleitet sind, und dass das Copolymer durch Emulsionspolymerisation erhalten wird.

## Revendications

1. Procédé de polymérisation sous pression produisant un copolymère comprenant des unités monomères dérivées de l'éthylène et d'au moins un ester de vinyle, **caractérisé en ce que** ladite polymérisation est réalisée en présence d'au moins un polymère dendritique, comme un polyester, polyéther, polyesteramide et/ou polyétheramide dendritique.

2. Procédé de polymérisation sous pression selon la revendication 1, **caractérisé en ce que** ledit polymère dendritique est présent en une quantité de 0,1-20 %, comme 0,1-10 % ou 0,5-5 %.

3. Procédé de polymérisation sous pression selon l'une quelconque des revendications 1 ou 2, **caractérisé en ce que** ledit polymère dendritique est au moins soumis partiellement à une extension de chaîne supplémentaire par addition d'au moins un agent d'extension de chaîne et/ou agent d'arrêt de chaîne linéaire ou ramifié.

4. Procédé de polymérisation sous pression selon la revendication 3, **caractérisé en ce que** ledit au moins un agent d'extension de chaîne et/ou agent d'arrêt de chaîne linéaire ou ramifié est au moins un oxyde d'alkylène, au moins un acide carboxylique aliphatique ou aromatique saturé ou insaturé ou au moins un anhydride ou halogénure correspondant, et/ou au moins un ester, polyester, éther et/ou polyéther carboxyfonctionnel.

5. Procédé de polymérisation sous pression selon l'une quelconque des revendications 1-4, **caractérisé en ce que** ledit polymère dendritique a au moins deux formations dendritiques.

6. Procédé de polymérisation sous pression selon l'une quelconque des revendications 1-5, **caractérisé en ce que** ledit au moins un ester de vinyle est l'acétate de vinyle, le propionate de vinyle, l'isobutyrate de vinyle, le 2-éthylhexanoate de vinyle, le versatate de vinyle et/ou le laurate de vinyle.

7. Procédé de polymérisation sous pression selon l'une quelconque des revendications 1-6, **caractérisé en ce que** ledit au moins un ester de vinyle est l'acétate de vinyle et/ou le versatate de vinyle.

8. Procédé de polymérisation sous pression selon l'une quelconque des revendications 1-7, **caractérisé en ce que** ledit copolymère produit comprend en outre des unités monomères dérivées d'au moins un monomère fonctionnel réticulant.

9. Procédé de polymérisation sous pression selon la revendication 8, **caractérisé en ce que** ledit au moins un monomère fonctionnel réticulant est un monomère ayant au moins un groupe vinyle polymérisable.

10. Procédé de polymérisation sous pression selon la revendication 8 ou 9, **caractérisé en ce que** ledit au moins un monomère fonctionnel réticulant est au moins un amide d'acide organique insaturé, au moins un dérivé de N-méthylol d'au moins un amide d'acide organique insaturé et/ou au moins un éther d'au moins un dérivé de N-méthylol d'au moins un amide d'acide organique insaturé.

11. Procédé de polymérisation sous pression selon l'une quelconque des revendications 8-10, **caractérisé en ce que** ledit au moins un monomère fonctionnel réticulant est l'acrylamide, le N-méthylolacrylamide, le N-méthylolméthylacrylamide, le N-(iso-butoxyméthyl)-acrylamide et/ou le N-(n-butoxyméthyl)acrylamide.

12. Procédé de polymérisation sous pression selon l'une quelconque des revendications 8-10, **caractérisé en ce que** ledit au moins un monomère fonctionnel réticulant est un acrylate de glycidyle, un méthacrylate de glycidyle et/ou un méthacrylate d'allyle.

13. Procédé de polymérisation sous pression selon l'une quelconque des revendications 8-10, **caractérisé en ce que** ledit au moins un monomère fonctionnel réticulant est au moins un ester di-, tri- et multifonctionnel d'un alcool di-, tri- ou polyhydroxylé et d'acide acrylique et/ou méthacrylique.

14. Procédé de polymérisation sous pression selon la revendication 13, **caractérisé en ce que** ledit au moins un monomère fonctionnel réticulant est le diacrylate de butanediol, le diacrylate de dipropylèneglycol, le diacrylate d'hexanediol, le diactylate de tripropylèneglycol, le diméthacrylate de butanediol, le diméthacrylate d'éthylèneglycol, le diméthacrylate de diéthylèneglycol, le triactylate de triméthylolpropane, le triacrylate de triméthylolpropane, le triacrylate de triméthylolpropane éthoxylé et/ou le diacrylate de pentaérythritol éthoxylé.

15. Procédé de polymérisation sous pression selon l'une quelconque des revendications 8.10, **caractérisé en ce que** ledit au moins un monomère fonctionnel réticulant est au moins un trialcoxyvinylsilane, alkyldialcoxyvinylsilane, acryloxyalcoxysilane, acryloxyalkylalcoxysilane, alcoxyacrylsilane, méthacryloxyalcoxysilane, méthacryloxyalkylalcoxysilane et/ou alcoxyméthacrylsilane,

16. Procédé de polymérisation sous pression selon la revendication 15, **caractérisé en ce que** ledit alkyle et/ou ledit alcoxy est linéaire ou ramifié ayant 1 à 4 atomes de carbone.

17. Procédé de polymérisation sous pression selon la revendication 15 ou 16, **caractérisé en ce que** ledit au moins un monomère réticulant est le triméthoxyvinylsilane, le triéthoxyvinylsilane, le triisopropoxyvinylsilane, le méthoxyméthacrylsilane et/ou le 3-méthacryloxypropyltriisopropoxysilane.

18. Procédé de polymérisation sous pression selon l'une quelconque des revendications 8-17, **caractérisé en ce que** ledit au moins un monomère fonctionnel réticulant est présent en une quantité de 0,1-10 %, comme 0,3-8 %, 0,3-6%, 0,4-2 %, 0,5-2 % ou 1-6 %.

19. Procédé de polymérisation sous pression selon l'une quelconque des revendications 1-18, **caractérisé en ce que** ledit copolymère produit comprend en outre des unités monomères dérivées d'au moins un monomère fonctionnel stabilisant ayant au moins un groupe polymérisable par polymérisation radicalaire et/ou au moins un groupe stabilisant par voie colloïdale et/ou stérique.

20. Procédé de polymérisation sous pression selon la revendication 19, **caractérisé en ce que** ledit au moins un monomère fonctionnel stabilisant est le vinylsulfonate et/ou le vinylsulfonate de sodium.

21. Procédé de polymérisation sous pression selon la revendication 19, **caractérisé en ce que** ledit au moins un monomère fonctionnel stabilisant est l'acide acrylique et/ou méthacrylique.

22. Procédé de polymérisation sous pression selon l'une quelconque des revendications 19-21, **caractérisé en ce que** ledit au moins un monomère fonctionnel stabilisant est présent en une quantité de 0,01-5 %, comme 0,3-2 % ou 0,05-0,2 %.

23. Procédé de polymérisation sous pression selon les revendications 1-22, **caractérisé en ce que** ledit copolymère produit comprend en outre des unités monomères dérivées d'au moins un monoester d'acide acrylique, méthacrylique, crotonique et/ou isocrotonique.

24. Procédé de polymérisation sous pression selon la revendication 23, **caractérisé en ce que** ledit au moins un monoester est un acrylate ou un méthacrylate de C₁-C₁₀ alkyle, comme l'acrylate de méthyle, l'acrylate d'éthyle, l'acrylate de butyle, l'acrylate de 2-éthylhexyle, le méthacrylate de méthyle, le méthacrylate d'éthyle et/ou le méthacrylate de butyle.

25. Procédé de polymérisation sous pression selon la revendication 23 ou 24, **caractérisé en ce que** ledit au moins un monoester est présent en une quantité de 0,1-50 %, comme 1-40 % ou 5-30 %.

26. Procédé de polymérisation sous pression selon l'une quelconque des revendications 1-25, **caractérisé par** un rapport massique de l'éthylène chargé à l'ester de vinyle chargé de 1-60 % d'éthylène et 99-40 % d'ester de vinyle, tel qu'un rapport massique de l'éthylène à rester de vinyle de 1:99%, 10:90%, 15:85%, 40:60%, 50:50% ou 60:40 %.

27. Procédé de polymérisation sous pression selon l'une quelconque des revendications 1-26, **caractérisé en ce que** ladite polymérisation est accomplie à une pression de 1-200 bar, comme 3-150 bar ou 5-100 bar.

28. Procédé de polymérisation sous pression selon l'une quelconque des revendications 1-27, **caractérisé en ce que** ladite polymérisation est accomplie à une température de 0-100°C, comme 5-90°C ou 20-85°C.

29. Procédé de polymérisation sous pression selon l'une quelconque des revendications 1-28, **caractérisé en ce que** ladite polymérisation est une polymérisation en émulsion, une polymérisation en solution ou une polymérisation en suspension.

30. Procédé de polymérisation sous pression selon l'une quelconque des revendications 1-29, **caractérisé en ce que** ledit copolymère produit comprend des unités monomères dérivées de l'éthylène et de l'acétate de vinyle et **en ce que** ledit copolymère est obtenu par polymérisation en émulsion.
